# EUROPEAN PATENT APPLICATION

(11) **EP 1 587 207 A1**
(43) Date of publication of application: **19.10.2005**
(21) Application number: 03815451.4
(22) Date of filing: 22.05.2003
(51) Int. Cl.: H02K 21/22, H02K 1/14

(54) **CLAW-POLE TYPE GENERATOR**

(30) Priority: 22.01.2003 JP 2003014013
(71) Applicant: Ichinomiya Denki Co. Ltd., Sisou-gun, Hyogo 671-4137 (JP)
(72) Inventor: AKITA, Uichi, Yazu-gun, Tottori 680-0701 (JP)
(74) Representative: Schildberg, Peter
(86) International application number: PCT/JP2003/006434
(87) International publication number: WO 2004/066475

(57) **Abstract**

The claw-pole dynamo (100) comprising: a permanent magnet (101) arranged in circular form; two stator yokes (102L and 102R) which respectively have a plurality of claw-like pole pieces (21L and 21R), which are alternately aligned in parallel in the circumferential direction and are arranged so as to be opposed to the permanent magnet (101); a core yoke (103) connecting the stator yokes (102L and 102R) magnetically; and a coil (104) arranged around the core yoke (103). The stator yoke (102L and 102R) is composed by laminating a plurality of thin plate materials (25a-25f) having disk parts (250a-250f) and a plurality of pole pieces (251a-251f) extending in the axial direction at a predetermined interval in the circumferential direction from the peripheral edge of the disk parts (250a-250f) in the thickness direction.

## Description

### Technical Field

The present invention relates to a claw-pole dynamo and, more particularly, a claw-pole dynamo used for a bicycle.

### Background Art

A conventional claw-pole dynamo is composed of a cylinder having a permanent magnet, two claw-pole stator yokes which respectively have pole pieces which are alternately aligned in parallel in the circumferential direction, a core yoke connecting the stator yokes magnetically, and a coil arranged around the core yoke (see Japanese Published Unexamined Patent Application No. 2991705) . The claw-pole dynamo comprises the permanent magnet as an outer rotor, the stator yokes, the core yoke and the coil as an inner stator. The rotation of the permanent magnet causes the generation of alternating flux in the core yoke, and thereby a current flows through the coil to generate electricity.

Since the eddy current is generated in conjunction with the generation of the alternating flux in the stator yoke and in the core yoke, and the eddy current reduces power generating efficiency, there is a need for suppressing the generation of the eddy current in the claw-pole dynamo. The eddy current as described above is larger in the core yoke in which a large quantity of the alternating fluxes pass through and in the vicinity of the center of the stator yoke. Therefore, constructions has been devised, which suppress the generation of the eddy current by forming silts in the axial direction on the outer circumference of the core yoke (see Japanese Published Unexamined Patent Application No. 2001-327139), or by forming slits in the radial direction in the vicinity of the center of the stator yoke (see Japanese Published Examined Patent Application No. 2991705).

Though the generation of the eddy current is suppressed by the constructions, and the power generating efficiency of the claw-pole dynamo is improved, there is a need for further miniaturizing the claw-pole dynamo and reducing the weight of the claw-pole dynamo, and further improving power generating efficiency thereof. Particularly, it is necessary to miniaturize and reduce the weight of a so-called hub dynamo for a bicycle which is fixed to a hub shaft of a wheel of a bicycle and is used as electrical power of a lamp or the like, and stably generate sufficient electrical power for the lamp or the like at a turning force, equivalent to the number of rotations of the wheel of the bicycle. Therefore, it is preferable to suppress the generation of the eddy current not only near the center of the core yoke and the stator yoke but also in other parts.

### Disclosure of Invention

The present invention has been accomplished in view of the foregoing. It is an object of the present invention to provide a means for suppressing the generation of the eddy current in the claw-pole dynamo and, more particularly, in the stator yoke of the claw-pole dynamo used for a bicycle.

The claw-pole dynamo of the present invention comprising: a permanent magnet arranged in circular form; two stator yokes which respectively have a plurality of claw-like pole pieces, which are alternately aligned in parallel in the circumferential direction and are arranged so as to be opposed to the permanent magnet; a core yoke connecting the two stator yokes magnetically; and a coil arranged around the core yoke, wherein the stator yoke is composed by laminating a plurality of thin plate materials having disk parts and a plurality of pole pieces extending in the axial direction at a predetermined interval in the circumferential direction from the peripheral edges of the disk parts in the thickness direction. Since the eddy current becomes difficult to flow in the thickness direction of the disk part of the stator yoke, and the power generating efficiency of the claw-pole dynamo is improved by suppressing the generation of the eddy current in the stator yoke, a claw-pole dynamo which is light weight and small-sized and has a large electromotive force can be achieved in accordance with the present invention.

In the claw-pole dynamo of the present invention, the pole pieces of the thin plate materials are formed such that the lengths of the pole pieces in the axial direction are sequentially shorter as the pole pieces are arranged outside the stator yoke. The pole pieces of the thin plate materials can be respectively opposed to the permanent magnet in accordance with the present invention. Since the alternating flux is efficiently generated in the thin plate materials, the power generating efficiency of the claw-pole dynamo can be improved.

It is conveniently suitable for processing and assembling that the thin plate materials are respectively fitted in an integrated state by fitting recess-projections or a fitting hole formed in the thickness direction. As a result, the assembling cost of the claw-pole dynamo can be reduced.

The thin plate materials are made of a silicon steel plate material. Since magnetic fluxes easily pass through the thin plate materials and the thin plate materials have larger electric resistance, the eddy current generated in the stator yoke can be further suppressed.

The claw-pole dynamo is fixed to a hub shaft of a wheel of a bicycle and is used for the bicycle. Thereby, a hub dynamo which is small and light, and stably generates sufficient electrical power for a lamp or the like at a turning force, equivalent to the number of rotations of the wheel of the bicycle can be achieved.

### Brief Description of the Drawings

Fig. 1 is a front view illustrating an overall construction of a claw-pole dynamo 100 fixed to a hub shaft 1 of a wheel of a bicycle.
Fig. 2 is a side view of a claw-pole dynamo 100.
Fig. 3 is a front view illustrating a construction of a permanent magnet 101.
Fig. 4 (a) is a front view illustrating the combined state of stator yokes 102L and 102R, and Fig. 4(b) is a side view thereof.
Fig. 5(a) is a cross sectional view illustrating a longitudinal cross section of a stator yoke 102L, and Fig. 5 (b) is a partial enlarged view of Fig. 5(a).
Fig. 6 is a plan view illustrating a construction of a thin plate material 25a.
Fig. 7 is a plan view illustrating a construction of a thin plate material 25f.
Fig. 8 (a) is a partial cross section illustrating fitting recess-projection 255f, and Fig. 8(b) is a partial cross sectional view illustrating a fitting state of a fitting hole 255a and fitting recess-projections 255b, 255c, 255d, 255e, and 255f.
Fig. 9 is a process arrangement plan for explaining a method for manufacturing a stator yoke 102.
Fig. 10(a) is a plan view illustrating a construction of thin plate materials 25a, 25b, 25c, 25d, 25e, and 25f in a laminated state, and Fig. 10(b) is a cross sectional view illustrating longitudinal cross sections thereof.
Fig. 11(a) is a front view illustrating constructions of a core yoke 103, a coil 104 and a bobbin 40, and Fig. 11 (b) is a side view illustrating partial cross sections thereof.
Fig. 12 is a schematic view illustrating an alternating flux G and an eddy current I generated in a claw-pole dynamo 100.

### Best Mode for Carrying Out the Invention

Hereinafter, the embodiment of the present invention will be described with reference to the drawings.

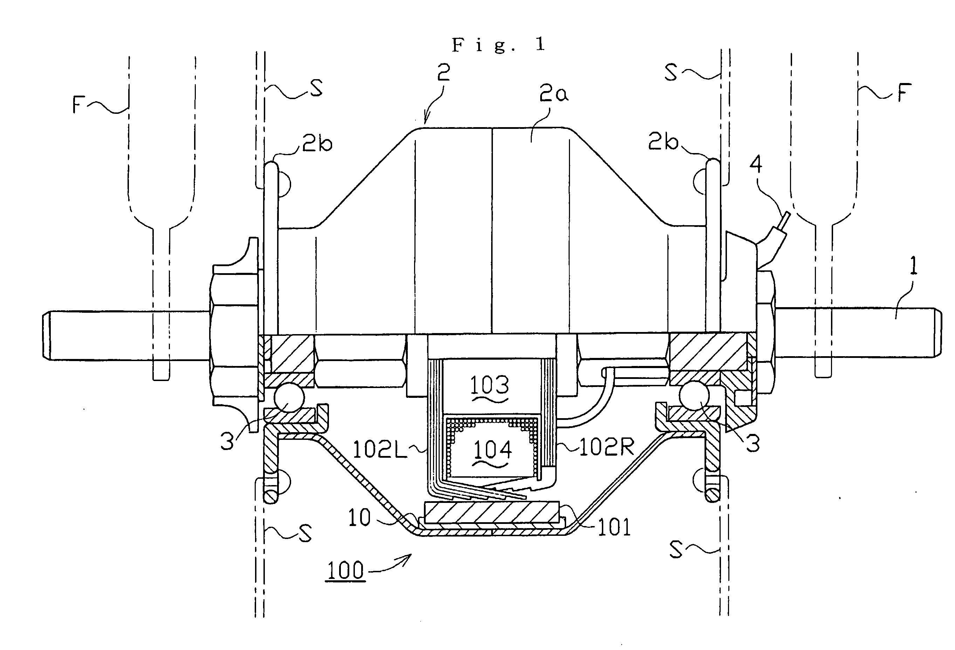

Fig. 1 illustrates an overall construction of a claw-pole dynamo 100 according to the embodiment of the present invention. As shown in Fig. 1, the claw-pole dynamo 100 is provided with a permanent magnet 101 arranged in circular form, two stator yokes 102L and 102R arranged so as to be opposed to the permanent magnet 101, a core yoke 103 connecting the stator yokes 102L and 102R magnetically, and a coil 104 arranged around the core yoke 103. The claw-pole dynamo 100 thus constructed is fixed to a hub shaft 1 of a wheel of any known bicycle and the claw-pole dynamo 100 composes a hub dynamo for a bicycle. While not shown in detail in Fig. 1, a male screw is formed on the hub shaft 1, and the hub shaft 1 is fixed to a fork F for a bicycle wheel by a nut or the like.

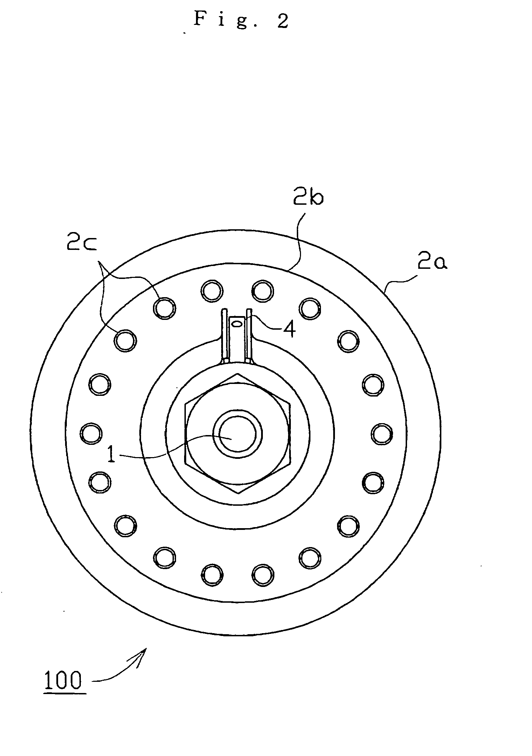

A hub casing 2 is rotatably attached to the hub shaft 1 via a bearing 3. The hub casing 2 is provided with a drum hub 2a and a spoke hub 2b. As shown in Fig. 1 and Fig. 2, the drum hub 2a is a cylindrical body of which the diameter of the vicinity of the center is larger and the diameter is smaller in a tapered shape toward both ends. Disk spoke hubs 2b are respectively provided at both ends of the drum hub 2a. A plurality of holes 2c are arrayed in the circumferential direction at the vicinity of the peripheral edge of the spoke hub 2b. Spokes S are inserted into the holes 2c, and the spoke hub 2b is connected by a rim of a wheel (not shown) by the spoke S . A terminal 4 for taking out the power of the claw-pole dynamo 100 contained in the hub casing 2 is projected outward from the hub casing 2.

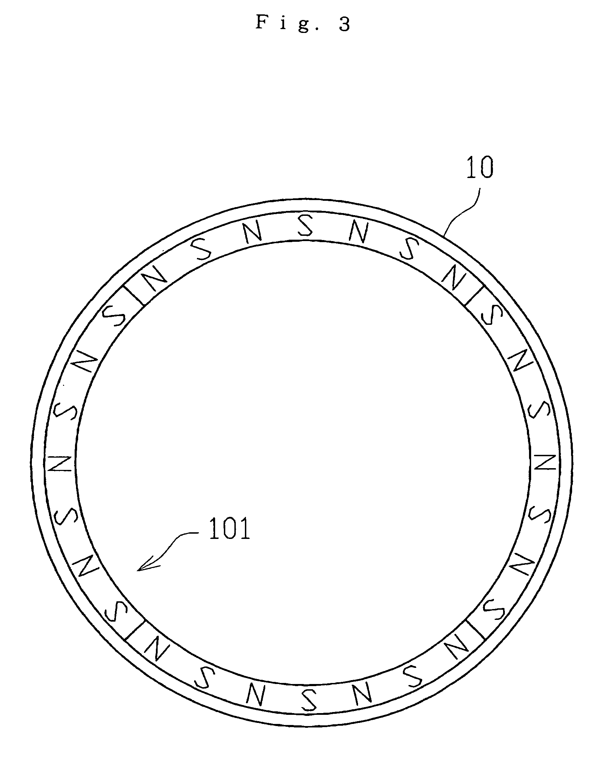

The permanent magnet 101 is fixed to the inner circumferential surface of the large diameter part of the center of the hub casing 2a via a back-up ring 10. As shown in Fig. 3, the back-up ring 10 is an annular ring-shaped frame body, and four magnetic steel sheets composing the permanent magnet 101 are fixed to the inner circumferential surface of the back-up ring 10 continuously and annularly. The permanent magnet 101 arranged in circular form is magnetized with alternating N and S poles disposed in the circumferential direction such that 28 total poles exist. The permanent magnet 101 as described above and the hub casing 2 compose an outer rotor of the claw-pole dynamo 100. The wheel of the bicycle is rotated around the axis of the hub shaft 1. Thereby the hub casing 2 is rotated, and the permanent magnet 101 arranged in circular form on the inner circumferential surface of the hub casing 2 is also rotated.

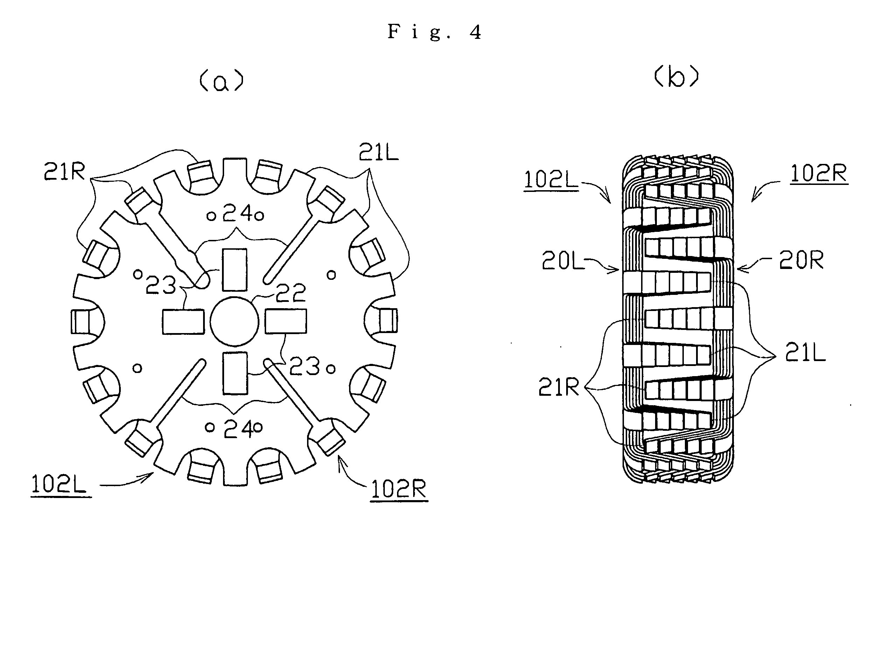

As shown in Fig. 1, the stator yokes 102L and 102R are externally fitted to the hub shaft 1 so as to be positioned inside the permanent magnet 101. As shown in Fig. 4, the stator yoke 102L has the same shape as that of the stator yoke 102R, and accordingly, hereinafter, the construction of the stator yoke 102L will be explained as an example. As shown in Fig. 4(a), the stator yoke 102L is provided with a disk part 20L and a plurality of pole pieces 21L extending in the thickness direction of the disk part 20L at predetermined intervals in the circumferential direction from the peripheral edge of the disk part 20L. While not shown in detail in Fig. 4, the stator yoke 102L is composed by laminating a plurality of thin plate materials in the thickness direction. The laminated structure will be described in detail afterwards.

The disk part 20L has a size to an extent that the disk part 20L is contained inside the permanent magnet 101. As shown in Fig. 1, the external diameter of the disk part 20L is set so as to be alienated to an extent where the magnetic force of the permanent magnet 101 acts on the pole pieces 21L when the stator yokes 102L and 102R are arranged inside the permanent magnet 101. An insertion hole 22 for inserting the hub shaft 1 is perforated at the center of the disk part 20L, and core fitting holes 23 for fitting the core yoke 103 are perforated at four points around the insertion hole 22. In addition, slits 24 are formed in the radial direction from four points of the outer peripheral edge of the disk part 20. The slits 24 suppress an eddy current which flows in the circumferential direction of the disk part 20L in accordance with an alternating flux. In detail, when the alternating flux is generated in the axial direction of the core yoke 103 fitted to the core fitting hole 23, the eddy current is generated around the alternating flux, that is, in the circumferential direction of the disk part 20L. The formation of the slit 24 on the flow passage of the eddy current makes the eddy current hard to flow in the circumferential direction of the disk part 20L, and thereby the generation of the eddy current is suppressed. The pole pieces 21L of 14 poles are formed on the outer peripheral edge of the disk part 20L. The pole pieces 21L extend almost at a right angle in the thickness direction of the disk part 20L, and the longitudinal direction thereof is in parallel to the axial direction of the hub shaft 1 inserted into the insertion hole 22 of the disk part 20L.

As shown in Fig. 4(b), the stator yokes 102L and 102R thus constructed are combined such that the pole pieces 21L and 21R are alternately aligned in parallel in the circumferential direction. When the stator yokes 102L and 102R are arranged inside the permanent magnet 101, the pole pieces 21L and 21R of 14 poles are respectively opposed to the magnetic poles of 28 poles of the permanent magnet 101.

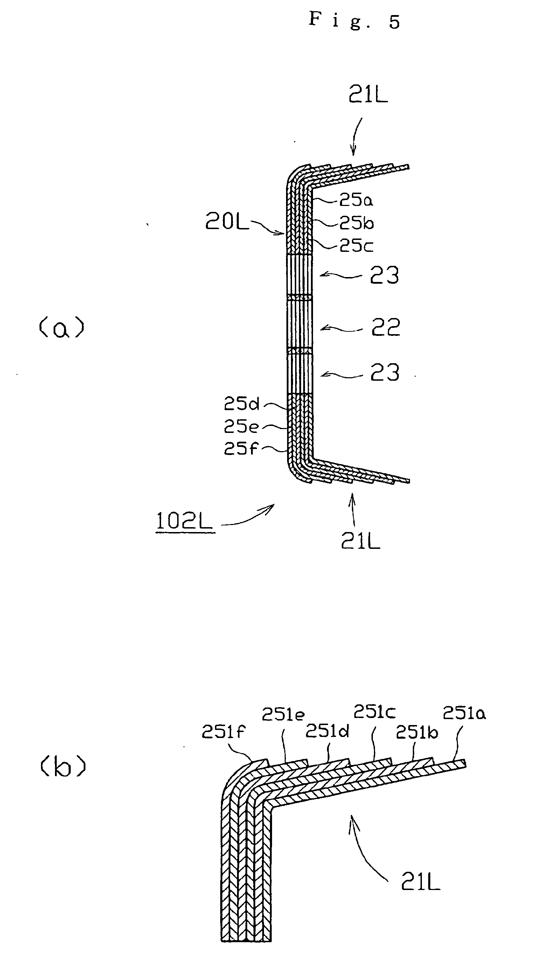

Next, the laminated structure of the stator yoke 102L in which a plurality of thin plate materials are laminated in the thickness direction will be explained as an example. Fig. 5 (a) is a longitudinal cross sectional view of the stator yoke 102L. As shown in Fig. 5 (a), the stator yoke 102L is a laminated body composed by laminating six thin plate materials 25a, 25b, 25c, 25d, 25e, and 25f having predetermined shapes, and the disk part 20L and the pole pieces 21L are composed by integrating the thin plate materials.

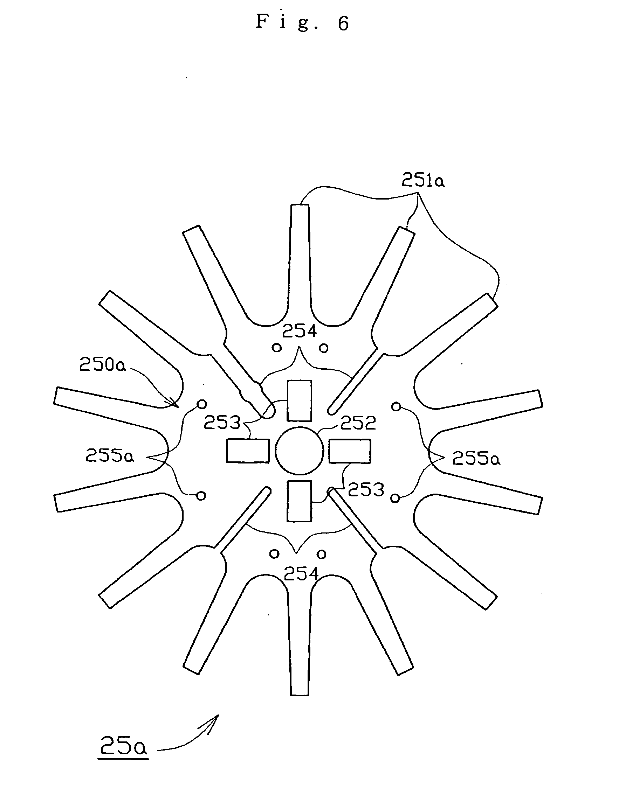

Fig. 6 is a development of the thin plate material 25a. As shown in Fig. 6, the thin plate material 25a is provided with a disk part 250a and a plurality of pole pieces 251a extending from the peripheral edge of the disk part 250a. The disk part 250a corresponds to the disk part 20L of the stator yoke 102L, and the pole piece 251a corresponds to the pole piece 21L. An insertion hole 252 for inserting the hub shaft 1 is perforated at the center of the disk part 250a, and core fitting holes 253 for fitting the core yoke 103 are perforated at four points around the insertion hole 252. In addition, slits 254 are formed in the radial direction from four points of the outer peripheral edge of the disk part 250a. The insertion hole 252, the core fitting holes 253 and the slits 254 correspond to the insertion hole 22 of the stator yoke 102, the core fitting holes 23 and the slits 24, respectively. The pole pieces 251a are bent almost at a right angle to the disk part 250a, and are projected in the axial direction of the insertion hole 252. Fitting holes 255a are properly formed in the disk part 250a. The fitting holes 255a are fitted to the fitting recess-projection of a thin plate material 25b (not shown) to which the thin plate material 25a is adjacent.

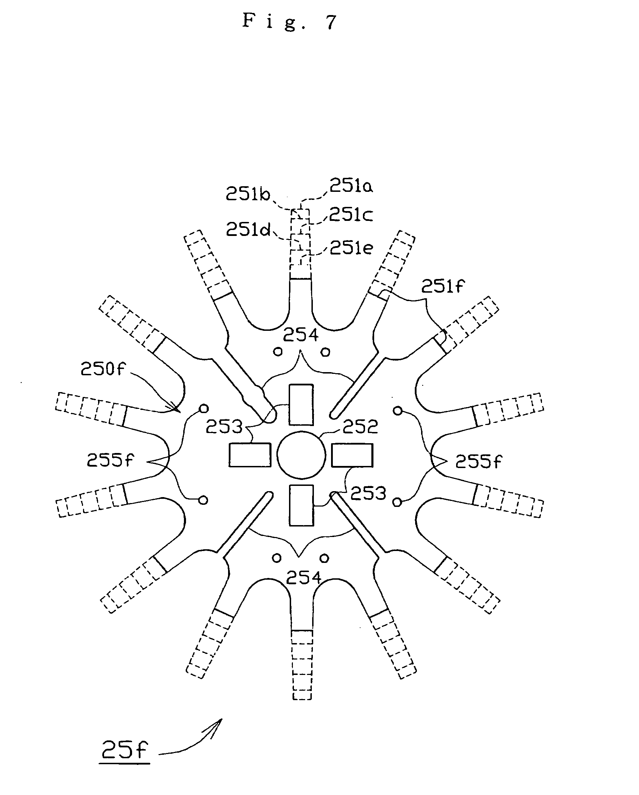

Fig. 7 is a development of the thin plate material 25f. The thin plate material 25f is also provided with a disk part 250f and a plurality of pole pieces 251f extending from the peripheral edge of the disk part 250f in the same manner as the thin plate material 25a. An insertion hole 252 for inserting the hub shaft 1, and core fitting holes 253 for fitting the core yoke 103 are perforated in the disk part 250f. In addition, slits 254 are formed in the radial direction from four points of the outer peripheral edge of the disk part 250f. However, there is a difference in that the projecting length of the pole piece 251f is shorter than that of the pole piece 251a of the thin plate material 25a. The projecting lengths of the pole pieces 251a, 251b, 251c, 251d, 251e, and 251f of the thin plate materials 25a, 25b, 25c, 25d, 25e, and 25f are formed so as to be sequentially shorter according to the laminations outside the stator yoke 102 as shown by a dotted line in Fig. 7. Therefore, when the thin plate materials 25a, 25b, 25c, 25d, 25e, and 25f are laminated to compose the stator yoke 102L, the vicinities of the end parts of the pole pieces 251a, 251b, 251c, 251d, 251e, and 251f of the pole piece 21L of the stator yoke 102L are exposed as shown in Fig. 5(b). Therefore, the pole pieces 251a, 251b, 251c, 251d, 251e, and 251f are respectively opposed to the permanent magnet 101, and the magnetic force of the permanent magnet 101 can efficiently act on the pole pieces 251a, 251b, 251c, 251d, 251e, and 251f.

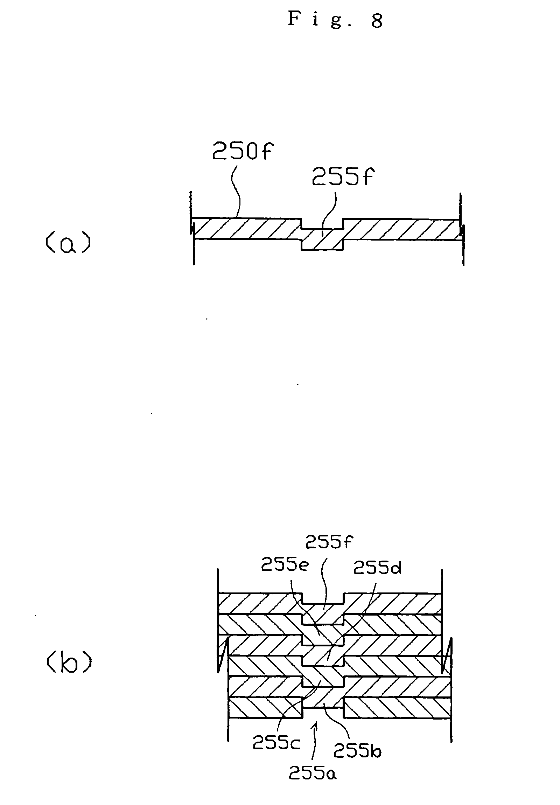

Fitting recess-projections 255f are perforated at the position corresponding to the fitting hole 255a in the disk part 250f. The fitting recess-projections 255f are fitted to an adjacent thin plate material 250e in a laminated state. As shown in Fig. 8(a), the recess-projections are integrally formed on the disk part 250f by applying a half-blanking punch on the disk part 250f. While not shown in Fig. 8, similar fitting recess-projections are formed on the thin plate materials 25b, 25c, 25d, and 25e. As shown in Fig. 8 (b), when the thin plate materials 25a, 25b, 25c, 25d, 25e, and 25f are sequentially laminated, the convex parts of the fitting recess-projections 255b, 255c, 255d, 255e, and 255f formed on the thin plate materials 25b, 25c, 25d, 25e, and 25f other than the thin plate material 25a are fitted to concave parts thereof, and the convex part of the fitting recess-projection 255b is fitted into the fitting hole 255a. Thereby six thin plate materials 25a, 25b, 25c, 25d, 25e, and 25f are integrally fixed. Thus, the disk part 250a can be integrated by perforating the fitting hole 255a in place of the fitting recess-projection without projecting the convex part of the fitting recess-projection from the outer surface of the stator yoke 102L, and by fitting the thin plate materials 25a, 25b, 25c, 25d, 25e, and 25f mutually. Though the fitting hole 255a is perforated in the thin plate material 25a in the embodiment, the fitting recess-projection may be formed in the thin plate material 25a and the fitting hole may be formed in the thin plate material 25f by reversing the recess-projection direction of the fitting recess-projection.

Thus, when the alternating flux is generated in the radial direction of the disk part 20L from the pole pieces 21L of the stator yoke 102L to the center of the disk part 20L by laminating the thin plate materials 25a, 25b, 25c, 25d, 25e, and 25f to compose the stator yoke 102L, the flow passage of the eddy current generated around the magnetic flux direction, that is, in the thickness direction of the disk part 20L can be cut by each boundary between the thin plate materials 25a, 25b, 25c, 25d, 25e, and 25f.

Hereinafter, a method for manufacturing the stator yoke 102L will be described.

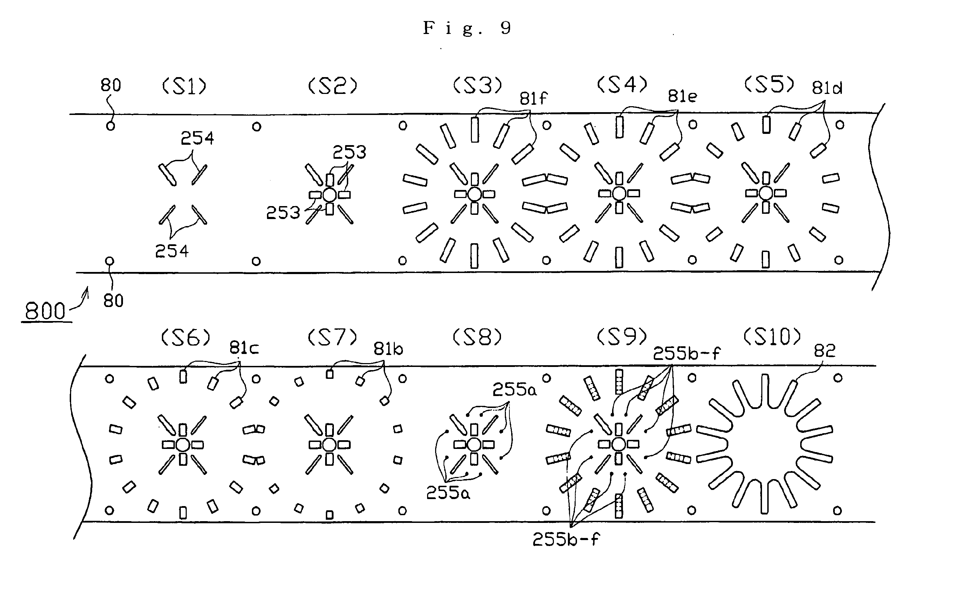

Fig. 9 is a process arrangement plan of a progressive metal die of a high-speed press for manufacturing the stator yoke 102L. The thin plate materials 25a, 25b, 25c, 25d, 25e, and 25f are punched out from the silicon steel plate material by a caulking die of a progressive die, and the stator yoke 102L is obtained. Since magnetic fluxes easily pass through the thin plate material 25a, 25b, 25c, 25d, 25e, and 25f and the thin plate materials 25a, 25b, 25c, 25d, 25e, and 25f have larger electric resistance by using the silicon steel plate material, it is preferable that the eddy current generated in the stator yoke 102L can be effectively suppressed. However, the stator yokes 102L and 102R are not limited to the silicon steel plate material. Any known and arbitrary magnetic materials generating the alternating flux (for instance, pure iron, and a cold strip such as SPCC, SPCD and SPCE) can be used. Hereinafter, each process will be sequentially described.

Pilot holes 80 to be a positioning standard are previously perforated in a band silicon steel plate material 800. The slits 254 are then punched off (S1). The insertion hole 252 and the core fitting holes 253 are then punched off (S2) . The insertion hole 252, the core fitting holes 253 and the slits 254 are common to the thin plate materials 25a, 25b, 25c, 25d, 25e, and 25f.

Next, pole piece cut holes 81b, 81c, 81d, 81e, and 81f for positioning the ends of the pole pieces 251b, 251c, 251d, 251e, and 251f of the thin plate materials 25b, 25c, 25d, 25e, and 25f other than the thin plate material 25a, and the fitting holes 255a of the thin plate material 25a are punched off (S3-S8). In detail, the fitting holes 255a (S8) of the thin plate material 25a, the pole piece cut holes 81b (S7) for positioning the ends of the pole pieces 251b of the thin plate material 25b, the pole piece cut holes 81c (S6) for positioning the ends of the pole pieces 251c of the thin plate material 25c, the pole piece cut holes 81d (S5) for positioning the ends of the pole pieces 251d of the thin plate material 25d, the pole piece cut holes 81e (S4) for positioning the ends of the pole pieces 251e of the thin plate material 25e, and the pole piece cut holes 81f (S3) for positioning the ends of the pole pieces 251f of the thin plate material 25f are punched off from the upstream side of the progressive direction. The pole piece cut holes 81b, 81c, 81d, 81e, and 81f make the projecting lengths of the pole pieces 251b, 251c, 251d, 251e, and 251f of the thin plate materials 25b, 25c, 25d, 25e, and 25f shorter sequentially. The pole piece cut holes 81b, 81c, 81d, 81e, and 81f are radially formed so as to correspond to the 14 pole pieces. The lengths of the pole piece cut holes 81b, 81c, 81d, 81e, and 81f in the radial direction are sequentially shorter as the projecting length of the pole pieces 251b, 251c, 251d, 251e, and 251f are sequentially shorter.

A cut punch for forming the pole piece cut holes 81b, 81c, 81d, 81e, and 81f and the fitting hole 255a of thin plate material 25a is performed for six thin plate materials laminated as one stator yoke 102L at the same time. After the cut punch is performed once, the cut punch is controlled by a counter or the like such that the cut punch is stopped only five times. Thereby, the thin plate materials 25b, 25c, 25d, 25e, and 25f for which the lengths of the pole pieces 251b, 251c, 251d, 251e, and 251f are different are continuously punched off from the upstream side of the forward feed direction, and can be fitted in a metal die.

Then, a half die cut punch is performed for respectively forming the fitting recess-projections 255b, 255c, 255d, 255e, and 255f to the thin plate materials 25b, 25c, 25d, 25e, and 25f other than the thin plate material 25a (S9) . In the half die cut punch, a punch is performed so as to be set to about 60% of the plate thickness of the silicon steel plate material 800, by which the fitting recess-projections 255b, 255c, 255d, 255e, and 255f are formed such that the concave and the convex position are respectively formed on the upper side of the silicon steel plate material 800 and on the lower side thereof. The position of the half die cut punch is the same as that of the cut punch for forming the fitting hole 255a described above. Since the fitting hole 255a has already been formed on the thin plate material 25a, the fitting recess-projection is not formed even if the half die cut punch is performed.

Next, an external shape part 82 is punched off to apply an exhaust pressure (S10) . Thus, the thin plate materials 25a, 25b, 25c, 25d, 25e, and 25f are pulled out from the silicon steel plate material 800, and are in pressure contact with the thin plate material already punched off by the exhaust pressure. As shown in Fig. 8 (b), the fitting holes 255a are fitted to the fitting recess-projections 255b, 255c, 255d, 255e, and 255f, and the thin plate materials 25a, 25b, 25c, 25d, 25e, and 25f are laminated in the die. Thereby the integrated stator yoke 102L is formed. Though the external shape part 82 is an external shape of the thin plate material 25a, the pole piece cut holes 81b, 81c, 81d, 81e, and 81f have been respectively formed in the thin plate materials 25b, 25c, 25d, 25e, and 25f other than the thin plate material 25a, and the pole pieces 251b, 251c, 251d, 251e, and 251f are formed such that length thereof is sequentially shorter. The exhaust pressure for press-contacting the thin plate materials 25a, 25b, 25c, 25d, 25e, and 25f can be applied by a known exhaust pressure ring or the like. While not shown in Fig. 9, the silicon steel plate material 800 of which the external shape part 82 is punched off is scrap cut into appropriate lengths.

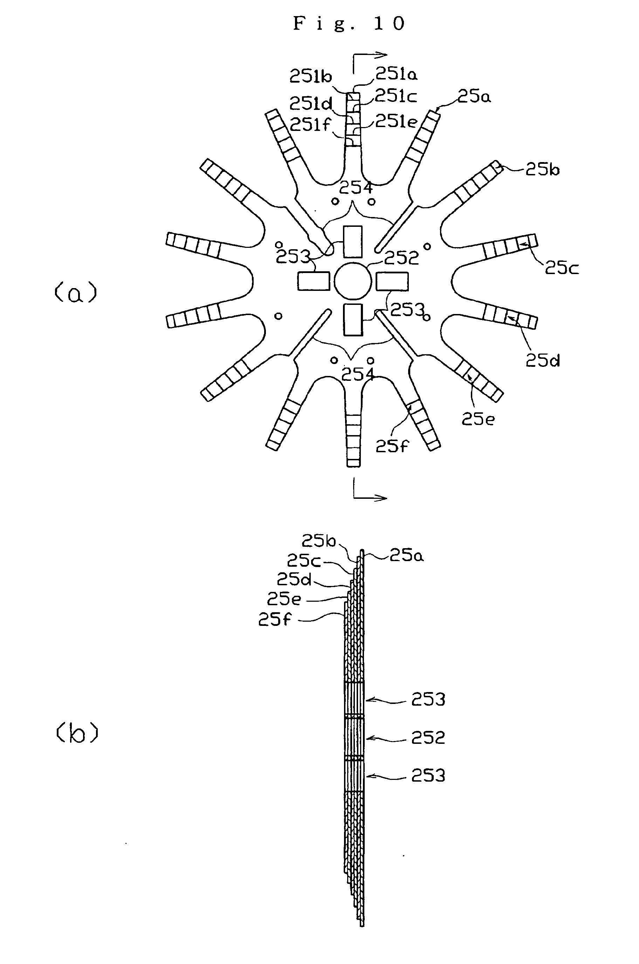

Fig. 10 is a plan view illustrating the laminated state of the thin plate materials 25a, 25b, 25c, 25d, 25e, and 25f punched off. The pole pieces 251a, 251b, 251c, 251d, 251e, and 251f of the thin plate materials 25a, 25b, 25c, 25d, 25e, and 25f thus integrated are respectively bent substantially 90 degrees to obtain the stator yoke 102L shown in Fig. 5.

The thin plate materials 25a, 25b, 25c, 25d, 25e, and 25f of the embodiment are punched off from the silicon steel plate material 800 downward and are sequentially laminated. However, after the thin plate materials 25a, 25b, 25c, 25d, 25e, and 25f are punched off, the thin plate materials 25a, 25b, 25c, 25d, 25e, and 25f can be also discharged to the upper side of the silicon steel plate material 800 to be laminated. Though the fitting hole 255a and the fitting recess-projections 255b, 255c, 255d, 255d, 255e, and 255f can be formed at a desired position and a desired number, it is preferable that a plurality of fitting recess-projections are arranged at about equal predetermined intervals in the circumferential direction such that the fitting power which acts on the thin plate materials 25a, 25b, 25c, 25d, 25e, and 25f is uniform. It is possible to use other fixing means for laminating the thin plate materials mutually such as laser welding.

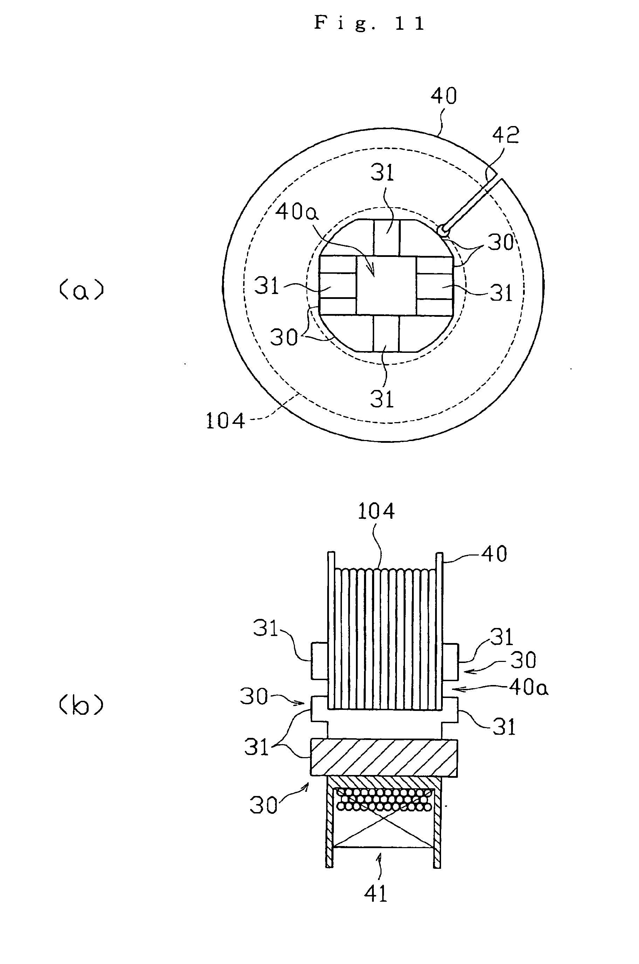

Though Fig. 11 shows the core yoke 103 and the coil 104, the core yoke 103 is composed by combining four core yoke pieces 30 circularly such that the hub shaft 1 can be inserted, and the core yoke 103 are contained in a hollow part 40a of a bobbin 40 around which a coil 104 is wound. Fitting convex parts 31 inserted into the core fitting holes 23 of the stator yokes 102L and 102R are respectively formed on both end faces of the core yoke piece 30. The stator yokes 102L and 102R are inserted into the both ends of the core yoke 103, and the stator yoke 102L is magnetically connected with the stator yoke 103R. The core yoke piece 30 may have any known structure. For instance, the core yoke piece 30 may be made of a silicon steel plate material and an electromagnetic iron material or the like. In addition, the core yoke piece 30 may be integrated into one body by using a powdery sintering material such as ferrite.

The bobbin 40 is made of a resin to be wound with the coil 104. A groove 41 is formed on the outer circumferential face of the bobbin 40. A slit 42 is formed from the outer peripheral edge to the radial direction at the upper part of the bobbin 40, and one end of the inner peripheral side of the coil wound around the bobbin 40 can be drawn out from the slit 42. The core yoke 103 is arranged in the hollow part 40a of the bobbin 40. On the other hand, the coil 104 is wound around the groove 41 of the bobbin 40, and thereby the coil 104 is arranged around the core yoke 103.

As shown in Fig. 1, the core yoke 103, the coil 104 and the bobbin 40 constructed by this manner are externally fitted to the hub shaft 1. In addition, the stator yokes 102L and 102R are respectively inserted into the fitting convex parts 31 of both ends of the core yoke 103. The core yoke 103, the coil 104, the bobbin 40 and the stator yokes 102L and 102R are fixed to the hub shaft 1 by a nut or the like, and thereby the inner stator of the claw-pole dynamo 100 is composed.

Hereinafter, the operations of the claw-pole dynamo 100 will be described.

When a bicycle provided with the claw-pole dynamo 100 is made to travel, the wheel of the bicycle is rotated around the axis of the hub shaft 1, and the hub casing 2 is rotated. In addition, the permanent magnet 101 arranged in circular form on the inner circumferential surface is rotated. The 28 poles of the permanent magnet 101 correspond to the pole pieces 21L and 21R of the stator yokes 102L and 102R arranged therein, and the alternating flux is generated in the stator yokes 102L and 102R and the core yoke 103 by the rotation of the permanent magnet 101, and the induction current flows in the coil 104.

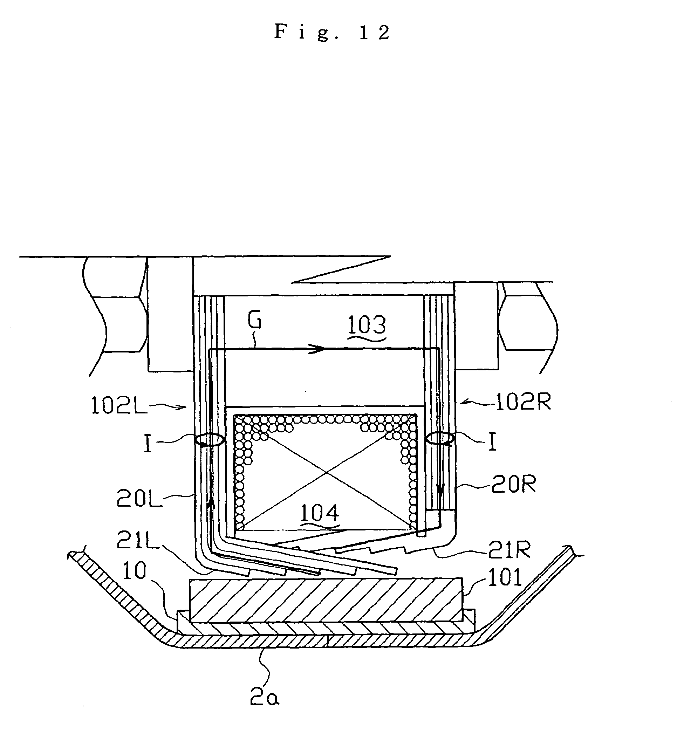

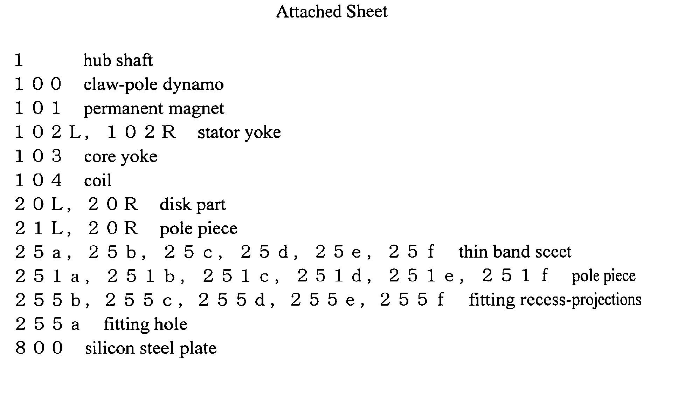

Fig. 12 is a schematic view illustrating the alternating flux. When the alternating flux G is generated from the pole piece 21L of the stator yoke 102L to the disk part 21L, the core yoke 103, the disk part 21R of the stator yoke 102R and the pole piece 21R, the eddy current is generated around the magnetic flux direction of the alternating flux G. Herein, in the disk parts 20L and 20R of the stator yokes 102L and 102R, the magnetic flux direction is the radial direction of the disk parts 20L and 20R and the eddy current I is generated in the thickness direction of the disk parts 20L and 20R. However, the stator yokes 102L and 102R are laminated bodies as described above, and the disk parts 20L and 20R are constructed by laminating six thin plate materials 25a, 25b, 25c, 25d, 25e, and 25f in the thickness direction. Thereby the flow passage is cut by each boundary between the thin plate materials 25a, 25b, 25c, 25d, 25e, and 25f, and the eddy current I becomes difficult to flow. Thus, the eddy current I generated in the thickness direction of each disk part 20L and 20R is suppressed. Thus, the power generating efficiency of the claw-pole dynamo 100 is improved.

### Industrial Applicability

The claw-pole dynamo of the present invention suppresses the generation of the eddy current, has high power generating efficiency, and has a large electromotive force. Particularly, the claw-pole dynamo of the present invention is useful as a claw-pole dynamo which is used for a bicycle, and is light in weight and small in size.

## Claims

1. A claw-pole dynamo comprising:
a permanent magnet arranged in circular form; two stator yokes which respectively have a plurality of claw-like pole pieces, which are alternately aligned in parallel in the circumferential direction and are arranged so as to be opposed to the permanent magnet; a core yoke connecting the stator yokes magnetically; and a coil arranged around the core yoke,
being **characterized in that** the stator yoke is composed by laminating a plurality of thin plate materials having disk parts and a plurality of pole pieces extending in the axial direction at a predetermined interval in the circumferential direction from the peripheral edges of the disk parts in the thickness direction.

2. The claw-pole dynamo according to claim 1, being **characterized in that** the pole pieces of the thin plate materials are formed such that the lengths of the pole pieces in the axial direction are sequentially shorter as the pole pieces are arranged outside the stator yoke.

3. The claw-pole dynamo according to claim 2, being **characterized in that** the thin plate materials are respectively fitted in the integrated state by fitting recess-projection or a fitting hole formed in the thickness direction.

4. The claw-pole dynamo according to claim 3, being **characterized in that** the thin plate materials are made of a silicon steel plate material.

5. The claw-pole dynamo according to claims 1 to 4, being **characterized in that** the claw-pole dynamo is fixed to a hub shaft of a wheel of a bicycle and is used for the bicycle.
